# EUROPÄISCHE PATENTSCHRIFT

(11) **EP 2 627 937 B1**
(45) Veröffentlichungstag und Bekanntmachung des Hinweises auf die Patenterteilung: **29.06.2016**
(21) Anmeldenummer: 11770052.6
(22) Anmeldetag: 08.10.2011
(51) Int. Cl.: F16L 19/025, F16L 29/00, F16L 59/18, F17C 13/00, F25D 19/00

(54) **BETANKUNGSKUPPLUNG**
REFUELLING COUPLING
Raccord de remplissage

(30) Priorität: 13.10.2010 DE 102010048383
(43) Veröffentlichungstag der Anmeldung: 21.08.2013
(73) Patentinhaber: Linde Aktiengesellschaft, 80331 München (DE)
(72) Erfinder: REESE, Wilfried-Henning, 85716 Unterschleißheim (DE); BRÜCKLMEIER, Martin, 82057 Icking (DE); SZARDENINGS, Roland, 82515 Wolfratshausen (DE)
(86) Internationale Anmeldenummer: PCT/EP2011/005041
(87) Internationale Veröffentlichungsnummer: WO 2012/048834

(56) Entgegenhaltungen:
- WO-A1-03/067140
- DE-C1- 19 516 029
- JP-A- 6 058 478

## Beschreibung

Die Erfindung betrifft eine Betankungskupplung, aufweisend
a) einen Kupplungsstecker,
b) in dem ein in axialer Richtung bewegliches Leitungsrohr angeordnet ist,
c) eine zu dem Kupplungsstecker korrespondierende Kupplungsdose,
d) wobei im zusammengekuppelten Zustand sich das Leitungsrohr über die Trennebene hinaus in die Kupplungsdose hinein erstreckt, so dass eine im vorderen Bereich des Leitungsrohres vorgesehene Medienöffnung mit der Eintrittsöffnung einer in der Kupplungsdose angeordneten Medienleitung zur Deckung kommt, und
e) Mittel zum Verbinden von Kupplungsstecker und Kupplungsdose,
f) wobei das Leitungsrohr isoliert ausgebildet ist.

Eine solche Kupplung ist aus JP-06058478A bekannt.

Ferner betrifft die Erfindung die Verwendung einer Betankungskupplung für die Befüllung von Speichervorrichtungen, die für die Kryodruckspeicherung geeignet sind.

Nachfolgend stehen die Bezeichnungen "LH₂" für flüssigen Wasserstoff und "GH₂" für gasförmigen Wasserstoff.

Aus dem Stand der Technik sind unterschiedliche Speichermethoden für Wasserstoff bekannt. Diese sind: Hochdruckspeicherung von GH₂, wobei z. Zt. Speicherdrücke bis 700 bar realisiert werden, Speicherung von LH₂ sowie Speicherung an Metallhydriden. Eine weitere alternative Speicherart, genannt "Kryodruckspeicherung", ermöglicht vergleichsweise hohe Speicherdichten bei vergleichsweise geringem Gewicht der dazu erforderlichen Speichervorrichtung. Die Kryodruckspeicherung vereint somit die Vorteile der Flüssigspeicherung mit den Vorteilen der Druckspeicherung.

Die Kryodruckspeicherung zeichnet sich dadurch aus, dass tiefkalter Wasserstoff, der vorzugsweise eine Temperaturen zwischen 30 und 80 K aufweist, bei einem Druck von mehreren hundert bar, vorzugsweise bei einem Druck von 250 bis 350 bar, in einem geeigneten Behälter gespeichert wird. Während für die eingangs genannten Speicherarten Hochdruckspeicherung, Flüssigspeicherung und Speicherung an Metallhydriden bereits Betankungsmethoden sowie entsprechende Betankungskupplungen existieren, ist dies bei der Kryodruckspeicherung nicht der Fall.

Die bisher ausschließlich in Versuchseinrichtungen existierenden Behälter werden durch feste Rohrleitungen und/oder Schläuche mit einer Fülleinrichtung verbunden. Eine Befüllung dieser Behälter ist erst nach umfangreichen Inertisier- und Druckwechselspülungen sowie Dichtheitstests möglich.

Aufgabe der vorliegenden Erfindung ist es, eine gattungsgemäße Betankungskupplung anzugeben, die eine Betankung von Behältern, die für die Kryodruckspeicherung geeignet sind, ermöglicht. Ziel der Erfindung ist es daher, eine möglichst einfache und kostengünstige Methode zur Befüllung von Kryodruckbehältern mittels einer speziellen Kryodruckkupplung zu schaffen, wobei diese im Bezug auf Handling und Befüllverfahren eine vergleichbar unkomplizierte Bedienung ermöglichen soll, wie die bekannten Betankungskupplungen für GH₂ und LH₂.

Zur Lösung dieser Aufgabe wird eine Betankungskupplung vorgeschlagen, die dadurch gekennzeichnet, dass
g) am vorderen Ende des Leitungsrohres ein erster Isolierkörper angeordnet ist,
h) die Kupplungsdose einen zu dem ersten Isolierkörper korrespondierenden zweiten, in axialer Richtung beweglichen zweiten Isolierkörper aufweist und
i) Leitungsrohr, erster Isolierkörper und zweiter Isolierkörper gasdicht abgedichtet sind.

Weitere vorteilhafte Ausgestaltungen der erfindungsgemäßen Betankungskupplung, die Gegenstände der abhängigen Patentansprüche darstellen, sind dadurch gekennzeichnet, dass
- der zweite Isolierkörper federbelastet ausgebildet ist,
- Mittel zum Erfassen der Position des Leitungsrohres vorgesehen sind,
- die Mittel zum Verbinden von Kupplungsstecker und Kupplungsdose als eine lösbare Verschraubung und/oder eine Verklammerung, ausgebildet sind, wobei die Verklammerung vorzugsweise als eine Kugel-in-Nut-Verklammerung oder Formkörper-in-Nut-Verklammerung ausgebildet ist, und
- dem Kupplungsstecker und/oder der Kupplungsdose Mittel zum Beheizen und/oder Kühlen zugeordnet sind.

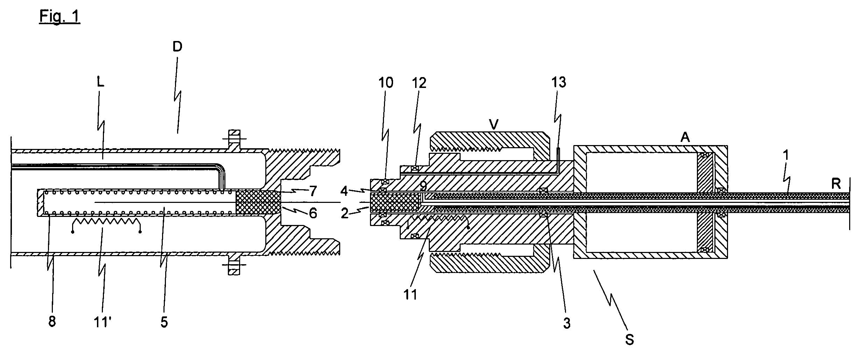

Die erfindungsgemäße Betankungskupplung sowie weitere vorteilhafte Ausgestaltungen derselben seien nachfolgend anhand der in den Figuren 1 bis 3 dargestellten Ausführungsbeispiele, die seitliche Schnittdarstellungen einer möglichen Ausführungsform der erfindungsgemäßen Betankungskupplung darstellen, näher erläutert. Hierbei zeigen die Figuren:
- Figur 1:: Betankungskupplung im entkuppelten Zustand
- Figur 2:: Betankungskupplung im verbundenen Zustand, wobei das Leitungsrohr noch nicht über die Trennebene hinaus in die Kupplungsdose hinein verschoben ist
- Figur 3:: Betankungskupplung im verbundenen Zustand, wobei das Leitungsrohr über die Trennebene hinaus in die Kupplungsdose hinein verschoben ist

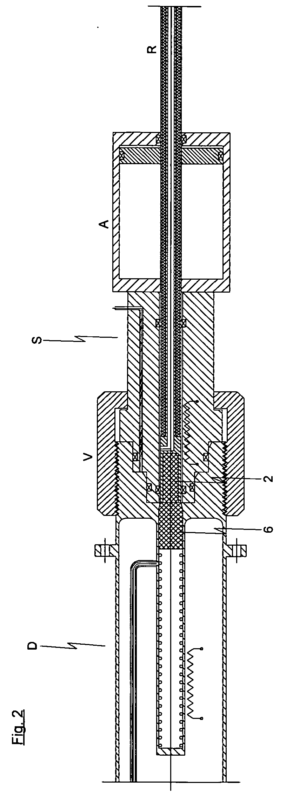

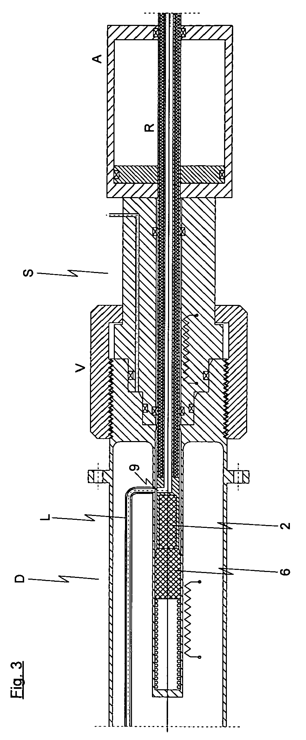

Anmerkung: Der Übersichtlichkeit halber sind in den Figuren 2 und 3 die meisten der in der Figur 1 angegebenen Bezugszeichen und -ziffern nicht nochmals angegeben.

Der Übersichtlichkeit halber sind in den Figuren die Medienleitungen, über die Medium der Betankungskupplung zugeführt und von dieser abgeführt wird, nicht dargestellt. Die Betankungskupplung weist einen Kupplungsstecker S sowie eine Kupplungsdose D auf. Im Kupplungsstecker S ist ein in axialer Richtung bewegliches Leitungsrohr R angeordnet. Das Verschieben des Leitungsrohrs R erfolgt mittels eines Antriebes A. Dieser kann als Kolbenantrieb pneumatisch oder hydraulisch ausgeführt sein, aber auch ein elektrischer Antrieb, bspw. durch eine Spindel, ist möglich. Im zusammengekuppelten Zustand (siehe Figur 3) erstreckt sich das Leitungsrohr R über die Trennebene T hinaus in die Kupplungsdose D bzw. einen in dieser vorgesehenen Zylinderraum 5 hinein, so dass eine im vorderen Bereich des Leitungsrohres R vorgesehene Medienöffnung 9 mit der Eintrittsöffnung einer in der Kupplungsdose D angeordneten Medienleitung L zur Deckung kommt. In dieser Position kann das zu überfüllende Medium durch die Betankungskupplung strömen.

Erfindungsgemäß ist nunmehr das Leitungsrohr R isoliert ausgebildet, wozu die eigentliche Medienleitung bspw. von einer Vakuumisolierung 1 umgeben ist. Mittels einer derartigen Isolation kann das durch das Leitungsrohr R strömende Medium gegen die warmen Teile des Kupplungssteckers S in radialer Richtung thermisch isoliert werden. Unter dem Begriff "warm" seien nachfolgend Temperaturen zwischen -40 bis +85 °C gemeint, während der Begriff "tiefe Temperaturen" für Temperaturen unterhalb von -40 °C und der Begriff "kryogene Temperaturen" für Temperaturen zwischen -270 und -150 °C stehe.

Am vorderen Ende des Leitungsrohres R ist erfindungsgemäß ein erster Isolierkörper 2 angeordnet, während die Kupplungsdose D einen zu dem ersten Isolierkörper 2 korrespondierenden, in axialer Richtung beweglichen zweiten Isolierkörper 6 aufweist. Dieser ist in dem erwähnten Zylinderraum 5 angeordnet und vorzugsweise federbelastet ausgebildet. Es erfüllt somit die Funktion eines federbelasteten Rückschlagventils. Mittels dieser Isolierkörper wird im entkuppelten Zustand eine thermische Isolation zur Trennebene T hin gewährleistet. Des Weiteren sind Leitungsrohr R, erster Isolierkörper 2 und zweiter Isolierkörper 6 gasdicht abgedichtet. Dies wird mit den Dichtungen 3, 4 und 7 erreicht. Die kryogenen Abschnitte bzw. Teile des Kupplungssystems sind erfindungsgemäß derart ausgeführt, dass diese das (kryogene) Medium isoliert von den äußeren, warmen Abschnitten führen können, ohne dass eine direkte Abdichtung des Mediums bei kalten Temperaturen erfolgt.

Das Verbinden bzw. Verklammern von Kupplungsstecker S und Kupplungsdose D - in den Figuren dargestellt durch eine Verschraubung V - kann im Prinzip mit jeder Mechanik, die dem maximal auftretenden bzw. geforderten Druck standhält, realisiert werden. Alternativ zu einer mechanischen Verschraubung ist bspw. eine Schnellverklammerung mit Kugel-in-Nut-Verklammerung oder Formkörper-in-Nut-Verklammerung möglich. Kupplungsstecker S und Kupplungsdose D werden in vorteilhafter Weise mittels eines Schnellkupplungssystems, wie es bereits bei LH₂- und GH₂-Betankungskupplungen angewendet wird, miteinander verflanscht. Der Kupplungsstecker S weist in seinem der Kupplungsdose D zugewandten Bereich wenigstens ein zur Umgebung abdichtendes Dichtelement 10, das eine gasdichte Abdichtung der Verflanschung ermöglicht. Ein derartiges abdichtendes Dichtelement kann ergänzend oder alternativ auch in der Kupplungsdose D angeordnet sein.

Nachfolgend sei das mit der erfindungsgemäßen Betankungskupplung realisierbare Betankungs- bzw. Befüllverfahren im Detail erläutert. Wie in der Figur 2 dargestellt, erfolgt nach dem Verbinden von Kupplungsstecker S und Kupplungsdose D eine gasdichte Abdichtung der Verflanschung V mittels des Abdichtelements 10.

Die Geometrie derjenigen Bereiche von Kupplungsstecker S und Kupplungsdose D, die beim Verbinden aneinanderstoßen, ist derart ausgeführt, dass Toträume und Lufteinschlüsse zum Medienraum hin vermieden werden. Damit entfällt das üblicherweise vorzusehende Spülen eines ggf. vorhandenen Totraumes, das erforderlich wäre, um Fremdgase, Feuchtigkeit und Sauerstoff (Explosionsgefahr!) zu entfernen.

Der am vorderen Ende des Leitungsrohres R angeordnete erste Isolierkörper 2 liegt nunmehr an dem zu ihm korrespondierenden, in axialer Richtung beweglichen zweiten Isolierkörper 6 an. Da das kryogene Medium keine direkte Berührung mit den Isolierkörpern 2 und 6 hat, wird wirkungsvoll verhindert, dass die Isolierkörper durch das kryogene Medium gekühlt werden. Wird nunmehr das Leitungsrohr R über die Trennebene T hinaus in die Kupplungsdose D verschoben - wie dies in der Figur 3 dargestellt ist -, kommt in seiner Endlage eine im vorderen Bereich des Leitungsrohres R vorgesehene Medienöffnung 9 mit der Eintrittsöffnung einer in der Kupplungsdose D angeordneten Medienleitung L zur Deckung, so dass ein Überströmen von Medium aus dem Kupplungsstecker S in die Kupplungsdose D erfolgen kann.

Die erfindungsgemäße Betankungskupplung weist vorzugsweise Mittel zum Erfassen der Position des Leitungsrohres R auf. Mittels wenigstens eines entsprechenden Sensors wird die ordnungsgemäße Position des Leitungsrohres R festgestellt und erst dann die Befüllung mit dem (kryogenen) Medium gestartet.

Nach Beendigung des Befüllvorgangs werden das Leitungsrohr R und damit auch der erste Isolierkörper 2 wieder in den Kupplungsstecker S zurückgefahren. Die Abdichtung des Kupplungssteckers S zur Umgebung, wird während des gesamten Befüllvorgangs durch die warme Dichtung 10 gewährleistet. Die Abdichtung der Kupplungsdosenseite D erfolgt mit dem kupplungsdosenseitigen zweiten Isolierkörper bzw. Rückschlagventil 6 ebenfalls mit einer warmen Dichtung 7. Diese ist derart angeordnet, dass sie während des Befüllvorganges nicht umflutet und abgekühlt wird.

Die erfindungsgemäße Betankungskupplung ermöglicht aufgrund ihrer Konstruktion, dass unmittelbar nach Beendigung des Befüllvorganges ohne zeitlich aufwendigen Anwärmvorgang Kupplungsstecker S und Kupplungsdose D getrennt werden können und eine dauerhafte Abdichtung der geöffneten Flanschseiten zur Umgebung erreicht werden kann. Langwierige Spülvorgange und Anwärmzeiten vor, während und/oder nach dem Verbinden von Kupplungsstecker und Kupplungsdose erübrigen sich somit.

Trotz der vorbeschriebenen Isolationsmaßnahmen ist es technisch nicht machbar, einen Wärmefluss auf das Medium vollständig zu unterbinden. Dieser Wärmefluss würde bei längeren Befüllzeiten und je nach Güte der Isolation zu einer Abkühlung der die kryogenen Bereiche der Kupplung umgebenden Bauteile führen. Um dieses zu verhindern sind dem Kupplungsstecker S und/oder der Kupplungsdose D vorzugsweise Mittel zum Beheizen und/oder Kühlen zugeordnet. So können Kupplungsstecker S und/oder Kupplungsdose D mit (einer) Heizvorrichtung(en) 11/11' versehen sein, die eine Abkühlung der warmen Komponenten durch Zuführung von Wärme verhindern. Durch die mechanische Verbindung mit der Kupplungsdose D und durch die Verwendung gut leitender Materialien der Flanschverbindung werden auch die entsprechenden Bauteile der Kupplungsdose D auf Umgebungstemperatur gehalten. Um eine unerwünschte Abkühlung des zweiten Isolierkörpers bzw. Rückschlagventils 6 während des Befüllvorganges in dem nicht umströmten Bereich der Kupplungsdose D zu verhindern, kann mittels eines Heizelement bzw. durch eine konstruktive Ausgestaltung einer thermisch leitenden Verbindung zu diesem Bereich Wärme zugeführt werden.

Nach dem Verbinden von Kupplungsstecker S und Kupplungsdose D und/oder während des Befüllvorganges kann die Dichtheit der Flanschverbindung mittels einer zweiten, am Kupplungsstecker S vorgesehenen Abdichtung 12, die einen Testraum bildet, überwacht werden. Alternativ oder ergänzend kann eine derartige Abdichtung auch in der Kupplungsdose angeordnet sein. Zum Zweck der Dichtheitsprüfung wird dem Testraum über Leitung 13 ein geeignetes Testgas zugeführt.

Die erfindungsgemäße Betankungskupplung löst die gestellte Aufgabe, nämlich hohe Drücke und kryogene Temperaturen innerhalb eines Kupplungssystems zu bewältigen. Der dafür erforderliche konstruktive Mehraufwand im Vergleich zu bekannten LH₂- und GH₂-Betankungskupplungen erscheint angesichts der erzielbaren Vorteile akzeptabel. Daher eignet sich die erfindungsgemäße Betankungskupplung insbesondere als Betankungskupplung für die Befüllung von Speichervorrichtungen, die für die Kryodruckspeicherung geeignet sind. Grundsätzlich kann die erfindungsgemäße Betankungskupplung jedoch auch für die Befüllung von LH₂- und GH₂-Speichervorrichtungen verwendet werden.

## Patentansprüche

1. Betankungskupplung, aufweisend
a) einen Kupplungsstecker (S),
b) in dem ein in axialer Richtung bewegliches Leitungsrohr (R) angeordnet ist,
c) eine zu dem Kupplungsstecker (S) korrespondierende Kupplungsdose (D),
d) wobei im zusammengekuppelten Zustand sich das Leitungsrohr (R) über die Trennebene (T) hinaus in die Kupplungsdose (D) hinein erstreckt, so dass eine im vorderen Bereich des Leitungsrohres (R) vorgesehene Medienöffnung (9) mit der Eintrittsöffnung einer in der Kupplungsdose (D) angeordneten Medienleitung (L) zur Deckung kommt, und
e) Mittel zum Verbinden von Kupplungsstecker (S) und Kupplungsdose (D),
f) wobei das Leitungsrohr (R) isoliert ausgebildet ist (1),
**dadurch gekennzeichnet, dass**
g) am vorderen Ende des Leitungsrohres (R) ein erster Isolierkörper (2) angeordnet ist,
h) die Kupplungsdose (D) einen zu dem ersten Isolierkörper (2) korrespondierenden zweiten, in axialer Richtung beweglichen zweiten Isolierkörper (6) aufweist und
i) Leitungsrohr (R), erster Isolierkörper (2) und zweiter Isolierkörper (6) gasdicht abgedichtet sind (3, 4, 7).

2. Betankungskupplung nach Anspruch 1, **dadurch gekennzeichnet, dass** der zweite Isolierkörper (6) federbelastet ausgebildet ist (8).

3. Betankungskupplung nach Anspruch 1 oder 2, **dadurch gekennzeichnet, dass** Mittel zum Erfassen der Position des Leitungsrohres (R) vorgesehen sind.

4. Betankungskupplung nach einem der vorhergehenden Ansprüche 1 bis 3, **dadurch gekennzeichnet, dass** die Mittel zum Verbinden von Kupplungsstecker (S) und Kupplungsdose (D) als eine lösbare Verschraubung und/oder eine Verklammerung ausgebildet sind.

5. Betankungskupplung nach Anspruch 4, **dadurch gekennzeichnet, dass** die Verklammerung als eine Kugel-in-Nut-Verklammerung oder Formkörper-in-Nut-Verklammerung ausgebildet ist.

6. Betankungskupplung nach einem der vorhergehenden Ansprüche 1 bis 5, **dadurch gekennzeichnet, dass** dem Kupplungsstecker (S) und/oder der Kupplungsdose (D) Mittel zum Beheizen und/oder Kühlen zugeordnet sind (11, 11').

7. Verwendung einer Betankungskupplung nach einem der vorhergehenden Ansprüche als Betankungskupplung für die Befüllung von Speichervorrichtungen jeglicher Art, vorzugsweise für die Befüllung von Speichervorrichtungen, die für die Kryodruckspeicherung geeignet sind.

## Claims

1. Refuelling coupling, having
a) a coupling plug (S),
b) in which a pipe (R) which is moveable in the axial direction is arranged,
c) a coupling socket (D) corresponding to the coupling plug (S),
d) wherein, in the coupled-together state, the pipe (R) extends beyond the separating plane (T) into the coupling socket (D) such that a media opening (9) provided in the front region of the pipe (R) overlaps with the entry opening in a media line (L) arranged in the coupling socket (D), and
e) means for connecting coupling plug (S) and coupling socket (D),
f) wherein the pipe (R) is formed in an insulated manner (1),
**characterized in that**
g) a first insulating body (2) is arranged at the front end of the pipe (R),
h) the coupling socket (D) has a second insulating body (6) which corresponds to the first insulating body (2) and is moveable in the axial direction, and
i) pipe (R), first insulating body (2) and second insulating body (6) are sealed in a gas-tight manner (3, 4, 7).

2. Refuelling coupling according to Claim 1, **characterized in that** the second insulating body (6) is formed in a spring-loaded manner (8).

3. Refuelling coupling according to Claim 1 or 2, **characterized in that** means for detecting the position of the pipe (R) are provided.

4. Refuelling coupling according to one of the preceding Claims 1 to 3, **characterized in that** the means for connecting coupling plug (S) and coupling socket (D) are in the form of a releasable screw connection and/or a clamping connection.

5. Refuelling coupling according to Claim 4, **characterized in that** the clamping connection is in the form of a ball-in-groove clamping connection or shaped body-in-groove clamping connection.

6. Refuelling coupling according to one of the preceding Claims 1 to 5, **characterized in that** the coupling plug (S) and/or the coupling socket (D) are/is assigned means for heating and/or cooling (11, 11').

7. Use of a refuelling coupling according to one of the preceding claims as a refuelling coupling for filling storage devices of any type, preferably for filling storage devices which are suitable for pressurized cryogenic storage.

## Revendications

1. Raccord de remplissage, présentant
a) un connecteur mâle (S),
b) dans lequel est disposé un tube de guidage (R) déplaçable dans une direction axiale,
c) un connecteur femelle (D) correspondant au connecteur mâle (S),
d) le tube de guidage (R) s'étendant au-delà du plan de séparation (T) dans le connecteur femelle (D) dans l'état assemblé par couplage de telle sorte qu'une ouverture de fluide (9) prévue dans la région avant du tube de guidage (R) vienne en coïncidence avec l'ouverture d'entrée d'une conduite de fluide (L) disposée dans le connecteur femelle (D), et
e) des moyens pour raccorder le connecteur mâle (S) et le connecteur femelle (D),
f) le tube de guidage (R) étant réalisé de manière isolée (1),
**caractérisé en ce que**
g) un premier corps isolant (2) est disposé à l'extrémité avant du tube de guidage (R),
h) le connecteur femelle (D) présente un deuxième corps isolant (6) déplaçable dans la direction axiale, correspondant au premier corps isolant (2), et
i) le tube de guidage (R), le premier corps isolant (2) et le deuxième corps isolant (6) sont étanchéifiés de manière étanche aux gaz (3, 4, 7).

2. Raccord de remplissage selon la revendication 1, **caractérisé en ce que** le deuxième corps isolant (6) est réalisé de manière sollicitée par ressort (8).

3. Raccord de remplissage selon la revendication 1 ou 2, **caractérisé en ce que** des moyens sont prévus pour détecter la position du tube de guidage (R).

4. Raccord de remplissage selon l'une quelconque des revendications précédentes 1 à 3, **caractérisé en ce que** les moyens pour raccorder le connecteur mâle (S) et le connecteur femelle (D) sont réalisés sous la forme d'un vissage amovible et/ou d'un serrage.

5. Raccord de remplissage selon la revendication 4, **caractérisé en ce que** le serrage est réalisé sous la forme d'un serrage à bille et rainure ou sous la forme d'un serrage à corps façonné et rainure.

6. Raccord de remplissage selon l'une quelconque des revendications précédentes 1 à 5, **caractérisé en ce que** le connecteur mâle (S) et/ou le connecteur femelle (D) sont associés à des moyens pour chauffer et/ou refroidir (11, 11').

7. Utilisation d'un raccord de remplissage selon l'une quelconque des revendications précédentes en tant que raccord de remplissage pour le remplissage de dispositifs de stockage de tous types, de préférence pour le remplissage de dispositifs de stockage appropriés pour le stockage sous pression cryogénique.
